# EUROPÄISCHE PATENTSCHRIFT

(11) **EP 2 769 109 B1**
(45) Veröffentlichungstag und Bekanntmachung des Hinweises auf die Patenterteilung: **18.03.2015**
(21) Anmeldenummer: 12783109.7
(22) Anmeldetag: 17.10.2012
(51) Int. Cl.: F16D 3/38

(54) **VERBINDUNGSEINRICHTUNG UND VERFAHREN ZU DEREN HERSTELLUNG**
CONNECTING DEVICE AND METHOD FOR PRODUCING IT
DISPOSITIF D'ASSEMBLAGE ET PROCÉDÉ DE FABRICATION DUDIT DISPOSITIF

(30) Priorität: 21.10.2011 DE 102011116571
(43) Veröffentlichungstag der Anmeldung: 27.08.2014
(73) Patentinhaber: ThyssenKrupp Presta AG, 9492 Eschen (LI)
(72) Erfinder: BRASSEL, Michael, 9470 Buchs (CH); BERTSCH, Reinhardat, 6832 Röthis (AT)
(74) Vertreter: Lenzing Gerber Stute
(86) Internationale Anmeldenummer: PCT/EP2012/004338
(87) Internationale Veröffentlichungsnummer: WO 2013/056822

(56) Entgegenhaltungen:
- EP-A2- 1 178 232
- EP-A2- 1 479 933
- WO-A1-2010/109232
- DE-C1- 19 605 894
- FR-A1- 2 858 289
- US-A1- 2002 041 790

## Beschreibung

Die vorliegende Erfindung betrifft eine Verbindungseinrichtung einer Gelenkwelle mit zwei ineinandergreifenden Teilen nach dem Oberbegriff des unabhängigen Anspruchs 1. Weiterhin betrifft die Erfindung ein Verfahren zur Herstellung einer Welle-Gabel-Verbindung nach dem Oberbegriff des unabhängigen Anspruchs 6.

Gelenkwellen werden dort vornehmlich eingesetzt, wo flexible Kupplungen nicht mehr zur Übertragung eines Drehmoments bei nichtfluchtenden Drehachsen oder sich gegeneinander bewegenden Teilen ausreichen. Auch werden Gelenkwellen zum Längenausgleich eingesetzt.

Eine Gelenkwelle umfasst wenigstens ein Gabelgelenk, das mit einem Schaft oder einer Welle verbunden wird. Zur Übertragung der Drehmomente werden bei solchen auch als Welle-Nabe-Verbindungen bezeichneten Verbindungen die Kontakt- bzw. Verbindungsflächen der beiden Bauteile meist kraft- und/oder reibschlüssig miteinander verbunden. Hierzu werden die Kontaktflächen mit einer Rändelung (Zahnung) versehen, die eine gute Kraft- bzw. Reibschlüssigkeit gewährleistet.

Die Verbindungsfläche der Gelenkgabel, die in einer Ausnehmung angeordnet ist, wird dabei mit einer in Längsrichtung gerichtete Zahnung versehen, die mittels einer Räumoperation eingebracht wird. Dabei handelt es sich um eine spanende oder schneidende Tätigkeit. Die Verbindungsfläche des Schaftes weist eine in radialer Richtung gerichtete Verzahnung auf, also Erhöhungen und Vertiefungen, die sich in Umfangsrichtung des Schaftes erstrecken. Solch eine Gelenkgabelverbindung ist aus der 10 2006 051 129 B3 bekannt.

Das Zusammensetzen der Gelenkgabel mit dem Schaft bedingt die Gefahr einer leichten Geometrieverformung der Bauteile. Ebenso kann durch die Räumoperation eine Geometrieverformung auftreten, da die auf das Bauteil wirkenden Kräfte beim Räumen erheblich sind. Eine solche Verformung kann deshalb nachteilige Auswirkungen auf eine Lagegenauigkeit beim späteren Einsatz der Gelenkwelle haben.

Die Offenlegungsschriften US 2002/0041790 und FR 2 858 2889 A1 offenbaren eine Verbindungseinrichtung einer Gelenkwelle mit zwei ineinandergreifenden Teilen, aufweisend eine Gelenkgabel und einen mit der Gelenkgabel in Eingriff stehenden Schaft, wobei die Gelenkgabel ein Gewinde und der Schaft eine im Wesentlichen axial angeordnete Zahnung aufweist.

Es ist deshalb eine Aufgabe der vorliegenden Erfindung, die eingangs genannte Verbindungseinrichtung von Gelenkgabel und Schaft und deren Verfahren zur Herstellung weiterzuentwickeln und eine Verbindungseinrichtung und ein Verfahren bereit zu stellen, mit denen eine höhere Lagegenauigkeit erzielbar ist.

Eine Verbindungseinrichtung zur Lösung der erfinderischen Aufgabe weist die Merkmale des unabhängigen Anspruchs 1 auf. Danach handelt es sich um eine Verbindungseinrichtung einer Gelenkwelle mit zwei ineinandergreifenden Teilen, aufweisend eine Gelenkgabel und einen mit der Gelenkgabel in Eingriff stehenden Schaft, wobei die Gelenkgabel eine Ausnehmung zur Aufnahme des Schaftes aufweist und die Gelenkgabel und der Schaft eine Zahnung im Bereich einer Verbindungsfläche von Gelenkgabel und Schaft aufweisen, und wobei die Zahnung der Gelenkgabel in Wesentlichen radial und die Zahnung des Schaftes in Wesentlichen axial angeordnet ist, wobei die Zahnung der Gelenkgabel ein Gewinde ist und wobei das Gewinde ein rechts- oder linksdrehendes Innengewinde ist. Mit einer in der Ausnehmung radial angeordneten, also an der Innenseite der Ausnehmung in Umfangsrichtung umlaufenden Zahnung kann der Verformung beim Zusammensetzen und auch bei der Herstellung der Zahnung weitestgehend vermieden werden. Durch einen rotierenden Bewegungsablauf beim Herstellen der Zahnung können die einwirkenden Kräfte besser aufgenommen werden, weshalb keine so hohen einseitigen Kräfte entstehen können.. Bei einem Innengewinde weist die Ausnehmung der Gelenkgabel eine fortlaufende wendelartige Zahnung auf, mit dem der Schaft in Eingriff steht. Ebenso ist es möglich, dass das Gewinde ein Spitz-, Säge-, Rund-, Trapez- oder Flachgewinde ist. Mit den unterschiedlichen Ausgestaltungen des Gewindes können bessere Verbindungen der Bauteile erzielt werden, vor allem in Abhängigkeit der Gelenkwellengeometrie und auch Materialbeschaffenheit.

Weiterhin kann vorteilhaft vorgesehen sein, dass das Gewinde einen, zwei oder mehr Gewindegänge aufweist. Hierdurch kann ebenso der Verbindung weiter verstärkt werden.

Nach einer weiteren Ausbildung der Erfindung kann die Zahnung des Schaftes Längszähne aufweisen, insbesondere die Zahnung aus eine Abfolge aus radialen Vorsprüngen und Vertiefungen gebildet sein, die im Wesentlich in einer Längserstreckung des Schaftes sich erstrecken. Diese Zahnung korrespondiert mit der Zahnung der Ausnehmung und bedingt einen besseren Kraft- und Formschluss beider Bauteile.

Weiterhin wird die Aufgabe mit einem Verfahren mit den Merkmalen des unabhängigen Anspruchs 7 gelöst. Bei einem solchen Verfahren zur Herstellung einer insbesondere kraft- und formschlüssigen Welle-Gabel-Verbindung, wird ein Schaft in eine Ausnehmung einer Gelenkgabel im Wesentlichen konzentrisch angeordnet und der Schaft und die Gelenkgabel mit einer Zahnung versehen, wobei die Gelenkgabel in einem Bereich einer Verbindungsfläche innerhalb der Ausnehmung mit einem Gewinde versehen ist und der Schaft mit einer im Wesentlich in axialer Richtung verlaufenden Zahnung versehen wird.

Nach einer bevorzugten Ausführungsform der Erfindung kann der Schaft im Bereich einer Verbindungsfläche mit einer Abfolge von radialen Erhöhungen und Vertiefungen.

Gemäß einer bevorzugten Weiterbildung kann das Gewinde rolliert oder geschnitten werden. Hierdurch kann besonders schonend die Zahnung in die Ausnehmung eingebracht werden und den Verformungen entgegengewirkt werden.

Weiterhin kann vorteilhaft vorgesehen sein, den Schaft mit der Längsverzahnung in die Ausnehmung mit dem Gewinde einzupressen und in einer Endposition an einem vorderen Ende zu verstemmen, wobei der Schaft und die Gelenkgabel im Presssitz miteinander verbunden werden.

Weitere vorteilhafte Ausgestaltungen der Verbindungseinrichtung und des Verfahrens können Teil der Unteransprüche sein.

Nachfolgend wird eine bevorzugte Ausführungsform der Erfindung anhand der Zeichnung näher erläutert. In dieser zeigen:
- Fig. 1: eine Seitenansicht einer Gelenkgabel und eines Schaftes nach einem Ausführungsbeispiel der Erfindung, die noch nicht miteinander verbunden sind,
- Fig. 2: einen seitlichen Schnitt durch das Gelenkgabel und den Schaft
- Fig. 3: eine Seitenansicht einer Verbindung einer Gelenkgabel und eines Schaftes nach einem Ausführungsbeispiel der Erfindung,
- Fig. 4: eine perspektivische Ansicht eine Gelenkgabel und eines Schaftes, die noch nicht miteinander verbunden sind, und
- Fig. 5: eine perspektivische Ansicht einer Verbindung eine Gelenkgabel und eines Schaftes.

In den Figuren sind ein Gabelgelenk 10 und ein Schaft 11 dargestellt, die zusammen eine Verbindungseinrichtung 13 aus Gabelgelenk 10 und Schaft 11 bilden.

Die Gelenkgabel 10 umfasst eine Gabelbasis 14 mit zwei davon sich parallel erstreckenden Schenkeln 15, die an einem der Gabelbasis 14 gegenüberliegendem Ende mit einer Traverse 16 verbunden sind. In der Gabelbasis 14 ist eine Ausnehmung 17 angeordnet, die sich zentral durch die Gabelbasis 14 hindurcherstreckt.

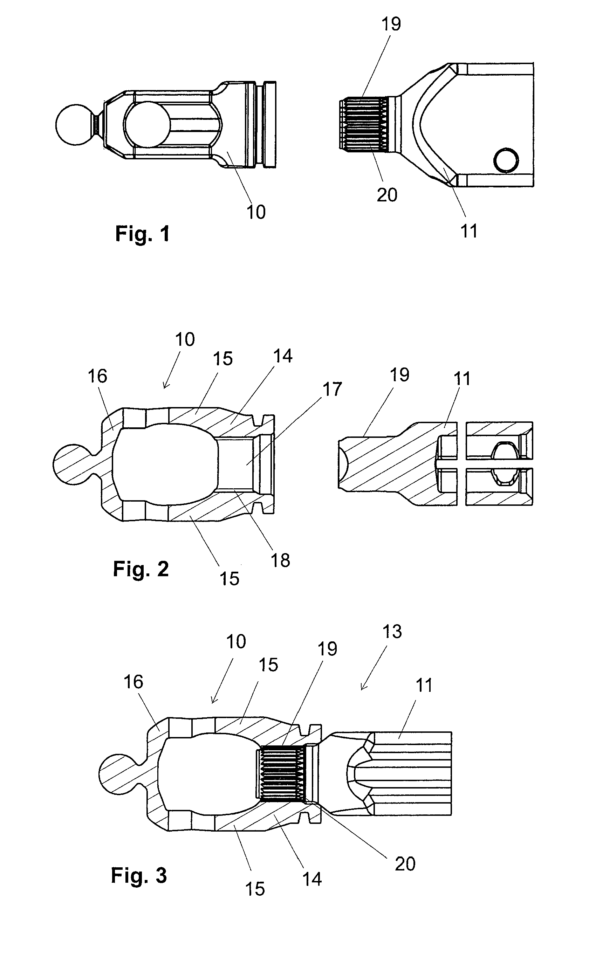

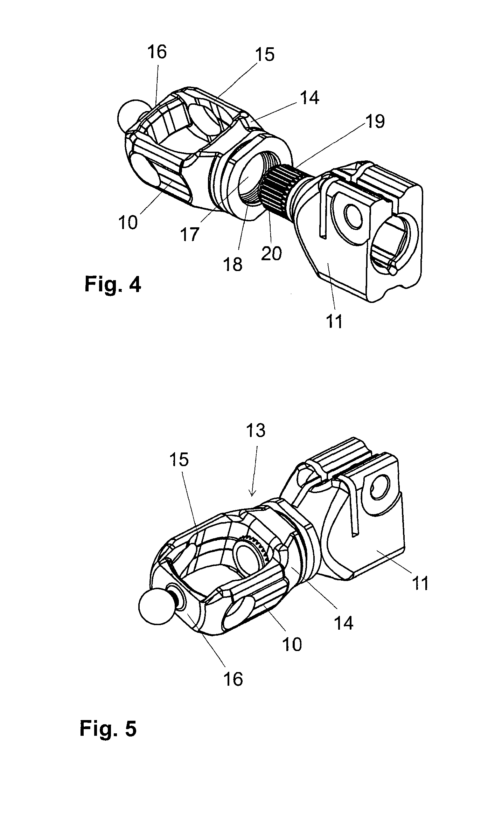

In der Ausnehmung 17, auch als Durchgangsbohrung, Durchbrechung oder Durchgangsöffnung bezeichnet, ist eine Zahnung vorgesehen, die in Fig. 4 dargestellt ist. In der Fig. 2 ist die Zahnung angedeutet. Die Zahnung ist in Form eines Gewindes 18 ausgeführt, weshalb es sich bei der Zahnung in der Ausnehmung 17 um ein innen liegendes Gewinde handelt.

Das Gewinde 18 weist somit einen fortlaufenden wendelartigen Gewindegang auf, der in Form einer Kerbe eine im Wesentlichen zylinderförmige Wandung der Ausnehmung durchläuft. Die sich wenigstens gegenüber der Kerbe abhebende Erhöhung bildet die Zahnung. In einer Längserstreckung der Ausnehmung wechseln sich durch das Gewinde 18 Erhöhungen und Vertiefungen einander ab, womit eine in etwa radiale Zahnung in der Ausnehmung 17 gegeben ist. Je nach Steigung des Gewindegangs sind die Erhöhungen und Vertiefungen winkelig zu einer gedachten Querachse der Ausnehmung 17 angeordnet.

Das Gewinde 18 ist in den Figuren nicht weiter spezifiziert. Es ist aber je nach Ausführungsform als rechtsgängiges oder linksgängiges Gewinde 18 ausgeführt. Zudem können auch die Gewindeflanken, also die Erhöhungen und Vertiefungen (Kerbe), unterschiedlich ausgeführt sein. Es sind Ausführungsformen mit Spitzgewinde, Sägegewinde, Rundgewinde, Trapezgewinde oder Flachgewinde vorgesehen. Zusätzlich können diese Ausführungsformen auch mit mehr als einem Gewindegang kombiniert werden, so dass man beispielsweise eine Ausführungsform mit Trapezgewinde und zwei Gewindegängen vorsieht. Die anderen Beispiele können beliebig miteinander kombiniert werden. Mit Vorteil hat das Gewinde einen Abstand vom kleinsten Innendurchmesser zum größten Innendurchmesser von etwa 0.8 bis 0.2 mm. Mit Vorzug stehen wenigstens acht Gewindeerhöhungen, beziehungsweise Gewindegänge bei der Verbindung in Eingriff.

In den Figuren ist zudem ein Schaft bzw. eine Welle 11 dargestellt, der bzw. die in der Ausnehmung 17 des Gabelgelenks anordenbar ist. Dieses ist zumindest in den Fig. 3 und 5 dargestellt. Zur Aufnahme des Schaftes 11 in der Ausnehmung 17 weist der Schaft 11 einen Aufnahmebereich 19 mit einer Kontaktfläche auf, die mit einer Zahnung 20 versehen ist. Die Zahnung ist aus Erhöhungen und Vertiefungen gebildet, die sich in radialer Richtung des Aufnahmebereichs 19 erstreckt. Mit Vorteil ist der Abstand zwischen Erhöhungen und Vertiefungen der Verzahnung im Bereich von 0.8 bis 2mm. Es ist denkbar und möglich die Verzahnung bei einem Umformprozess oder einem Gussprozess zur Herstellung des Schalters 11 direkt mit einzubringen oder einzuformen.

Zur Verbindung des Schafts 11 mit der Gelenkgabel ist der Aufnahmebereich 19 in der Ausnehmung 17 angeordnet, wobei, wie in den Fig. 3 und 5 dargestellt ist, die beiden Abschnitte miteinander korrespondieren. Das betrifft vornehmlich die Abmessung der beiden Bauteile. Beide Bauteile sind sowohl kraft- als auch formschlüssig miteinander verbunden, wodurch eine optimale Kraftübertragung von Schaft 11 auf die Gelenkgabe. 10 oder umgekehrt gewährleistet ist.

Die Herstellung der Zahnung insbesondere in der Gelenkgabel 10 ist einfach und wenig kraftaufwendig. Dadurch, dass die Zahnung als Gewinde 18 ausgebildet ist, ist der Herstellungsprozess ein kontinuierlicher. Das Gewinde 18 kann dabei entweder gerollt oder geschnitten werden. Das Einbringen eines Gewindes 18 ist fertigungstechnisch einfach zu erbringen. Es ist denkbar und möglich, das Gewinde bei einem Umformprozess oder einem Gussprozess zur Herstellung der Gabel direkt mit einzubringen oder einzuformen. Die Herstellung der Rändelung bzw. Zahnung in den Aufnahmebereich 19 des Schaftes 11 ist ebenfalls einfach.

In einem zweiten Arbeitsgang, nach Herstellung der Zahnung sowohl in der Ausnehmung 17 als auch auf dem Aufnahmebereich 19, werden die beiden Bauteile, Gabelgelenk 10 und Schaft 11, miteinander verpresst und verstemmt. Zwischen beide Bauteile entsteht somit ein Kraft- und Formschluss, da sich die Rändelverzahnung jeweils in die andere querlaufende Zahnung formend eingräbt. Durch entsprechende Rückfederungen wird neben dem Formschluss in Umfangsrichtung auch ein Formschluss in Längsrichtung erzeugt.

Die Erfindung findet vor allem Anwendung bei Verbindungen einer Doppelkardan-Gabel oder normalen Gabel-Wellen/Zapfen-Verbindungen oder dergleichen. Das Gewinde kann dabei in beliebige Gelenkgabeln mit zylindrischer Ausnehmung eingebracht werden und mit einer Längsverzahnung eines korrespondierenden Bauteils verbunden werden.

## Patentansprüche

1. Verbindungseinrichtung einer Gelenkwelle mit zwei ineinandergreifenden Teilen, aufweisend eine Gelenkgabel (10) und einen mit der Gelenkgabel (10) in Eingriff stehenden Schaft (11), wobei die Gelenkgabel (10) eine Ausnehmung (17) zur Aufnahme des Schaftes (11) aufweist und die Gelenkgabel (10) und der Schaft (11) eine Zahnung im Bereich einer Verbindungsfläche von Gelenkgabel (10) und Schaft (11) aufweisen, und wobei die Zahnung der Gelenkgabel (10) im Wesentlichen radial und die Zahnung des Schaftes (11) im Wesentlichen axial angeordnet ist, und wobei die Zahnung der Gelenkgabel (10) ein Gewinde (18) ist **dadurch gekennzeichnet, dass** das Gewinde (18) ein rechts- oder linksdrehendes Innengewinde ist.

2. Verbindungseinrichtung einer Gelenkwelle nach Anspruch 1 **dadurch gekennzeichnet, dass** das Gewinde (18) ein Spitz-, Säge-, Rund-, Trapez- oder Flachgewinde ist.

3. Verbindungseinrichtung einer Gelenkwelle nach Anspruch 1 oder 2 **dadurch gekennzeichnet, dass** das Gewinde (18) einen, zwei oder mehr Gewindegänge aufweist.

4. Verbindungseinrichtung einer Gelenkwelle nach wenigstens einem der vorherigen Ansprüche, **dadurch gekennzeichnet, dass** die Zahnung des Schaftes (11) Längszähne aufweist, insbesondere die Zahnung aus eine Abfolge aus radialen Vorsprüngen und Vertiefungen gebildet ist, die im Wesentlich in einer Längserstreckung des Schaftes (11) sich erstrecken.

5. Verfahren zur Herstellung einer insbesondere kraft- und formschlüssigen Welle-Gabel-Verbindung, wobei ein Schaft (11) in eine Ausnehmung einer Gelenkgabel (10) im Wesentlichen konzentrisch angeordnet wird und der Schaft (11) und die Gelenkgabel (10) mit einer Zahnung versehen wird, **dadurch gekennzeichnet, dass** die Gelenkgabel (10) in einem Bereich einer Verbindungsfläche innerhalb einer Ausnehmung (17) mit einem Gewinde (18) versehen wird und der Schaft (11) mit einer im Wesentlich in axialer Richtung verlaufenden Zahnung versehen wird.

6. Verfahren nach Anspruch 5, **dadurch gekennzeichnet, dass** der Schaft (11) im Bereich einer Verbindungsfläche mit einer Abfolge von radialen Erhöhungen und Vertiefungen versehen wird.

7. Verfahren nach Anspruch 5 oder 6, **dadurch gekennzeichnet, dass** das Gewinde (18) rolliert wird.

8. Verfahren nach Anspruch 5 oder 6, **dadurch gekennzeichnet, dass** das Gewinde (18) geschnitten wird.

9. Verfahren nach wenigstens einem der vorherigen Ansprüche 6 bis 9, **dadurch gekennzeichnet, dass** der Schaft (11) mit der Längsverzahnung in die Ausnehmung (17) mit dem Gewinde (18) eingepresst und in einer Endposition an einem vorderen Ende verstemmt wird, wobei der Schaft (11) und die Gelenkgabel (10) im Presssitz miteinander verbunden werden.

## Claims

1. Connecting device for a drive shaft with two interlocking parts, having a joint fork (10) and a shank (11) which engages with the joint fork (10), wherein the joint fork (10) has a recess (17) into which the shank (11) is received, and the joint fork (10) and the shank (11) have a toothing system within the interlocking surface area of the joint fork (10) and the shank (11), and wherein the toothing system of the joint fork (10) is arranged substantially radially and the toothing system of the shank (11) is arranged substantially axially, and wherein the toothing system of the joint fork (10) is a thread (18), **characterised in that** the thread (18) is a right-handed or left-handed inner thread.

2. Connecting device for a drive shaft according to Claim 1, **characterised in that** the thread (18) is a V-thread, buttress thread, round thread, trapezoid thread or flat thread.

3. Connecting device for a drive shaft according to Claims 1 or 2, **characterised in that** the thread (18) has one, two or more threads.

4. Connecting device for a drive shaft according to at least one of the preceding claims, **characterised in that** the toothing system of the shank (11) has longitudinal teeth, in particular the toothing system is formed from a succession of radial projections and cavities, which extend substantially longitudinally along the shank (11).

5. Method for the manufacture of a specifically locked and keyed drive shaft connection, wherein a shank (11) is arranged substantially concentrically in a recess of a joint fork (10) and the shank (11) and the joint fork (10) are provided with a toothing system, **characterised in that** the joint fork (10) is provided with a thread (18) within an interlocking surface area inside a recess (17), and the shank (11) is provided with a toothing system which runs substantially in an axial direction.

6. Method according to Claim 5, **characterised in that** the shank (11) is provided with a succession of radial projections and cavities within an interlocking surface area.

7. Method according to Claim 5 or 6, **characterised in that** the thread (18) is rolled.

8. Method according to Claim 5 or 6, **characterised in that** the thread (18) is cut.

9. Method according to at least one of the preceding Claims 6 to 9, **characterised in that** the shank (11) with the longitudinal toothing system is press-fitted into the recess (17) with the thread (18) and is held in place in an end-position at a forward end, wherein the shank (11) and the joint fork (10) are interlocked within the press-fit seating.

## Revendications

1. Dispositif d'assemblage d'un arbre de transmission avec deux pièces étant en prise l'une avec l'autre, présentant une fourche d'articulation (10) et une tige (11) étant en prise avec une fourche d'articulation (10), où la fourche d'articulation (10) présente un évidement (17) destiné à accueillir la tige (11) et la fourche d'articulation (10), et la tige (11) présentent une denture dans la zone d'une surface d'assemblage de la fourche d'articulation (10) et de la tige (11), et où la denture de la fourche d'articulation (10) est agencée essentiellement radialement et la denture de la tige (11) est agencée essentiellement axialement, et où la denture de la fourche d'articulation (10) est un filetage (18), **caractérisé en ce que** le filetage (18) est un filetage femelle (18) tournant à droite ou à gauche.

2. Dispositif d'assemblage d'un arbre de transmission selon la revendication 1, **caractérisé en ce que** le filetage (18) est un filetage triangulaire, denté, arrondi, trapézoïdal ou plat.

3. Dispositif d'assemblage d'un arbre de transmission selon la revendication 1 ou 2, **caractérisé en ce que** le filetage (18) présente un, deux ou plusieurs filets hélicoïdaux.

4. Dispositif d'assemblage d'un arbre de transmission selon une des revendications précédentes, **caractérisé en ce que** la denture de la tige (11) présente des dents longitudinales, en particulier la denture est formée d'une succession de saillies et cavités radiales qui s'étendent essentiellement en une extension longitudinale de la tige (11).

5. Procédé de fabrication d'un assemblage transmission - fourche par liaison de force ou de forme, où une tige (11) est agencée essentiellement concentrique dans un évidement d'une fourche d'articulation (10) et la tige (11) et la fourche d'articulation (10) sont pourvues d'une denture, **caractérisé en ce que** la fourche d'articulation (10) est pourvue d'un filetage (18) dans une zone d'une surface d'assemblage à l'intérieur d'un évidemment (17), et la tige (11) est pourvue d'une denture passant en direction essentiellement axiale.

6. Procédé selon la revendication 5, **caractérisé en ce que** la tige (11) est pourvue, dans la zone d'une surface d'assemblage, d'une succession de crêtes et de cavités radiales.

7. Procédé selon la revendication 5 ou 6, **caractérisé en ce que** le filetage (18) est roulé.

8. Procédé selon la revendication 5 ou 6, **caractérisé en ce que** le filetage (18) est coupé.

9. Procédé selon une des revendications précédentes de 6 à 9, **caractérisé en ce que** la tige (11) est enfoncée avec la denture longitudinale dans l'évidement (17) avec le filetage (18) et est fixée par matage en une position de fin de course au niveau d'une extrémité avant, où la tige (11) et la fourche d'articulation (10) sont reliées l'une à l'autre en un ajustage serré.
